# EUROPÄISCHE PATENTSCHRIFT

(11) **EP 0 668 304 B1**
(45) Veröffentlichungstag und Bekanntmachung des Hinweises auf die Patenterteilung: **22.04.1998**
(21) Anmeldenummer: 95102111.2
(22) Anmeldetag: 16.02.1995
(51) Int. Cl.: C08G 18/22, C08G 18/80

(54) **Verfahren zur Herstellung von blockierten Isocyanaten, die erhaltenen blockierten Isocyanate und deren Verwendung**
Process for the preparation of blocked isocyanates, the blocked isocyanates obtained in this way and their use
Procédé pour la préparation d'isocyanates bloqués, les isocyanates bloqués ainsi obtenus et leur utilisation

(30) Priorität: 17.02.1994 DE 4405042
(43) Veröffentlichungstag der Anmeldung: 23.08.1995
(73) Patentinhaber: Herberts Gesellschaft mit beschränkter Haftung, 42285 Wuppertal (DE)
(72) Erfinder: Flosbach, Carmen, Dr., D-42115 Wuppertal (DE); Philipp, Dieter, D-42283 Wuppertal (DE); Schubert, Walter, Dr., D-42349 Wuppertal (DE)
(74) Vertreter: Türk, Gille, Hrabal, Leifert

(56) Entgegenhaltungen:
- EP-A- 0 319 608
- FR-A- 2 280 631

## Beschreibung

Die Erfindung betrifft ein Verfahren zur Herstellung von blockierten Isocyanaten, insbesondere Polyisocyanaten, mit mindestens zwei Isocyanatgruppen, die mit aciden Wasserstoff enthaltenden Blockierungsmitteln blockiert sind. Die erhaltenen blockierten Isocyanate sind besonders als Vernetzer für Polyole, insbesondere bei der Herstellung von Lackierungen geeignet.

Die Herstellung von blockierten Isocyanaten, insbesondere Polyisocyanaten durch Umsetzung mit aciden Wasserstoff enthaltenden Blockierungsmitteln, wie Malonsäuredialkylestern und Acetessigsäurealkylestern ist beispielsweise aus der DE-A-30 01 060, der DE-A-24 36 872 und der DE-A-23 42 603 bekannt. Die bekannten Verfahren werden unter Anwendung von Katalysatoren durchgeführt, die für die Umsetzung notwendig sind. Für die Umsetzung mit Malonsäurediestern werden Alkalimetalle, bevorzugt Natrium, Alkalialkoholate, bevorzugt Natriumalkoholate und Alkaliphenolate genannt. Für die Umsetzung mit Acetessigsäureestern wird auch Zinkacetylacetonat beschrieben.

Diese bekannten Katalysatoren sind stark basisch und schwer handhabbar. Zudem hat es sich gezeigt, daß die erhaltenen Reaktionsprodukte verfärbt, häufig vergilbt sind. Die Katalysatoren lösen sich im Reaktionsmedium und können nur unter aufwendigen Maßnahmen entfernt werden.

Aufgabe der vorliegenden Erfindung ist die Bereitstellung eines Verfahrens zur Herstellung von blockierten Isocyanaten, insbesondere Polyisocyanaten mit mindestens zwei Isocyanatgruppen pro Molekül, die zu möglichst hellen, im wesentlichen vergilbungsfreien Reaktionsprodukten führen und eine leichte Entfernung der verwendeten Katalysatoren ermöglichen.

Überraschenderweise wurde festgestellt, daß diese Aufgabe durch den Einsatz von Alkalihydroxiden, besonders Lithiumhydroxid gelöst werden kann. Die Alkalihydroxide sind leicht handhabbar; da sie sich nicht im Reaktionsmedium lösen, können sie nach Beendigung der Reaktion auf einfache Weise, z.B. durch Filtration aus dem Reaktionsgemisch entfernt werden.

Einen Gegenstand der Erfindung bildet daher ein Verfahren zur Herstellung von blockierten Isocyanaten, durch Umsetzung von freien Isocyanaten unter wasserfreien Bedingungen, mit aciden Wasserstoff enthaltenden Blockierungsmitteln, in Anwesenheit von basischen Katalysatoren, das dadurch gekennzeichnet ist, daß man als basische Katalysatoren ein oder mehrere Alkalihydroxide verwendet.

Einen weiteren Gegenstand der Erfindung bilden die erhaltenen blockierten Isocyanate und deren Verwendung, insbesondere in der Form von Polyisocyanaten als Vernetzer für Polyole. Die erhaltenen blockierten Isocyanate weisen einen besonders geringen Alkaligehalt, bedingt durch den Einsatz basischer Katalysatoren, auf. Dieser liegt bevorzugt unter 100 ppm, besonders bevorzugt unter 80 ppm und unter 50 ppm, berechnet als das Gewicht der Alkalimetalle und bezogen auf das Gewicht der blockierten Isocyanate.

Das erfindungsgemäße Verfahren kann auf beliebige Isocyanate mit freien Isocyanatfunktionen angewendet werden. Besonders geeignet ist es für die Blockierung von Polyisocyanaten mit mindestens zwei Isocyanatgruppen. Beispiele für solche Polyisocyanate sind aliphatische, cycloaliphatische oder aromatische Polyisocyanate wie z.B. Diisocyanate, wie lackübliche aliphatische, cycloaliphatische und aromatische Diisocyanate, z.B. 2,4-Toluylendiisocyanat, 2,6-Toluylendiisocyanat, 2,4'- und/oder 4,4'-Diphenylmethandiisocyanat, 1,6-Hexamethylendiisocyanat, m-Xylylendiisocyanat, p-Xylylendiisocyanat, Tetramethylendiisocyanat, 1-Isocyanato-3,3,5-trimethyl-5-isocyanato-methylcyclohexan (= Isophorondiisocyanat = IPDI) oder Tetramethylxylylendiisocyanat, 1,2-Propylendiisocyanat, 2,2,4-Trimethylendiisocyanat, Tetramethylendiisocyanat, 2,3-Butylendiisocyanat, 1,12-Dedecandiisocyanat, Cyclohexan-1,3- und 1,4-diisocyanat, Perhydro-2,4'- und/oder 4,4'-diphenylmethandiisocyanat, 1,3- und 1,4-Phenylendiisocyanat, 3,2'- und/oder 3,4'-Diisocyanato-4-methyldiphenylmethan, Naphthylen-1,5-diisocyanat, Triphenylmethan-4,4'-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetztem IPDI mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000 zur Anwendung. Bevorzugt werden die entsprechenden Polyhydroxylverbindungen, z.B. die in der Polyurethanchemie an sich bekannten Hydroxylpolyester, Hydroxylpolyether und/oder hydroxylgruppenhaltigen Acrylatharze verwendet.

Ebenfalls möglich ist die Verwendung von Copolymeren des vinylisch ungesättigten Monoisocyanats Dimethyl-m-isopropenylbenzylisocyanat, wie sie unter anderem in der DE-A-41 37 615 beschrieben sind.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Für das erfindungsgemäße Verfahren können bekannte Blockierungsmittel verwendet werden, die aciden Wasserstoff enthalten. Beispiele hierfür sind Malonsäuredialkylester und Acetessigsäurealkylester. Die Alkylgruppen der Ester, die im Malonsäuredialkylester gleich oder verschieden sein können, weisen bevorzugt 1 bis 4 Kohlenstoffatome auf.

Beispiele für Malonsäuredialkylester sind C₁-C₄-Alkylester, wie z.B. Malonsäuredimethyl-, diethyl-, -diisopropyl-, -di-tert.-butyl-ester, besonders bevorzugt ist Malonsäurediethylester. Beispiele für Acetessigsäurealkylester sind C₁-C₄-Alkylester wie Acetessigsäuremethyl-,-ethyl-, -isopropyl-, -tert.-butylester, besonders bevorzugt ist Acetessigsäureethylester. Möglich ist es auch Gemische dieser Ester einzusetzen.

Das Molverhältnis der aciden Wasserstoff enthaltenden Blockierungsmittel zu den NCO-Gruppen der Isocyanate, beispielsweise das Verhältnis der Malonsäuredialkylester und/oder Acetessigsäurealkylester zu NCO-Gruppen kann variiert werden, beispielsweise von 0,5 : 1 bis 1 : 1,5. Bei einem NCO-Überschuß können die freien NCO-Gruppen gegebenenfalls mit anderen Reaktionspartnern umgesetzt werden.

Bei den für das erfindungsgemäße Verfahren eingesetzten Katalysatoren handelt es sich um Alkalihydroxide, beispielsweise Alkalimetallhydroxide, wie Lithium-, Natrium- und/oder Kaliumhydroxid. Bevorzugt werden die wasserfreien Alkalimetallhydroxide eingesetzt. Besonders bevorzugt wird Lithiumhydroxid verwendet. Die Katalysatoren werden in katalytischen Mengen eingesetzt, beispielsweise in Mengen von 0,1 bis 2 Gew.-%, bevorzugt 0,3 bis 1 Gew.-%, bezogen auf das Gewicht von Isocyanat und Blockierungsmittel.

Die Katalysatoren werden in fester Form, beispielsweise pulverisiert, eingesetzt.

Die Addition des Blockierungsmittels an das Isocyanat wird unter wasserfreien Bedingungen, bevorzugt unter sorgfältigem Ausschluß von Feuchtigkeit durchgeführt. Die Umsetzung kann beispielsweise unter einem trockenen Inertgas, wie Stickstoff, durchgeführt werden.

Die Umsetzung kann lösemittelfrei oder in Gegenwart von organischen Lösemitteln erfolgen. Geeignete Lösemittel sind insbesondere solche, die nicht mit Polyisocyanaten reagieren. Beispiele für solche Lösemittel sind organische Lösemittel, wie aliphatische und aromatische Kohlenwasserstoffe, beispielsweise Xylol, Gemische aliphatischer und/oder aromatischer Kohlenwasserstoffe, Ester und Ether. Bevorzugt werden Lösemittel verwendet, in denen die Katalysatoren nicht löslich sind.

Vorzugsweise wird die Reaktion so durchgeführt, daß der Katalysator im Isocyanat und dem gegebenenfalls vorhandenen Lösemittel dispergiert wird und das Blockierungsmittel, beispielsweise der Malonsäuredialkylester bzw. der Acetessigsäurealkylester in kleinen Portionen zugegeben wird.

Die Reaktion kann unter Erwärmen durchgeführt werden. Die Temperatur beträgt beispielsweise 50 bis 100°C, vorzugsweise 80 bis 100°C.

Die Reaktion wird solange bei der angegebenen Temperatur durchgeführt, bis der NCO-Gehalt auf die gewünschte NCO-Zahl gesunken ist. In der Regel wird die Reaktion durch Abkühlen auf Raumtemperatur abgebrochen, wenn die NCO-Zahl einen Wert von unter 0,5 % erreicht hat. Es kann jedoch auch vorteilhaft sein, bei Erreichen einer bestimmten NCO-Zahl dem Reaktionsgemisch Komponenten zuzufügen, die zur Reaktion mit Isocyanatgruppen befähigt sind. Dies können übliche Verkappungsmittel wie z.B. epsilon-Caprolacton, Butanonoxim sowie die weiteren dem Fachmann geläufigen Verkappungsmittel sein. Zur Umsetzung der restlichen NCO-Gruppen können aber auch Monoalkohole wie z.B. Methanol, Ethanol, Propanol oder Butanol verwendet werden. Die Umsetzung der restlichen NCO-Gruppen mit den vorstehend beschriebenen weiteren Komponenten kann ebenfalls unter Erwärmen, beispielsweise im vorstehend angegebenen Temperaturbereich von 50 bis 100°C, vorzugsweise 80 bis 100°C durchgeführt werden.

Bei der vorstehend beschriebenen Verfahrensweise handelt es sich um eine bevorzugte Verfahrensweise. Im Prinzip können die Reaktionskomponenten beliebig zur Reaktion gebracht werden. Beispielsweise kann die Umsetzung von Isocyanat mit Blockierungsmittel auch so durchgeführt werden, daß das Blockierungsmittel und der Katalysator vorgelegt werden und das Isocyanat, gegebenenfalls gelöst in Lösemittel, zugetropft wird. Die weiteren Reaktionsbedingungen sind die gleichen, wie bei dem zuvor beschriebenen bevorzugten Verfahren.

Beim erfindungsgemäßen Verfahren ist es möglich nach beendeter Reaktion den Katalysator, der ungelöst im Reaktionsmedium verbleibt, leicht zu entfernen. Dies kann beispielsweise durch Abfiltrieren oder Abzentrifugieren erfolgen. Gegebenenfalls kann das Umsetzungsprodukt vorher oder nachher mit Lösemitteln verdünnt werden. Hier können auch Lösemittel eingesetzt werden, die mit freien Polyisocyanaten reagieren können. Geeignete Lösemittel sind organische Lösemittel, insbesondere lackübliche Lösemittel, wie aromatische Kohlenwasserstoffe, beispielsweise Xylol, aliphatische Kohlenwasserstoffe, z.B. n-Hexan oder Cyclohexan, Gemische aliphatischer und/oder aromatischer Kohlenwasserstoffe, Ketone, wie z.B. Aceton, Methylisopropylketon, Ester, wie z.B. Butylacetat oder Ethylacetat, Ether, wie z.B. Methoxypropanol oder Butoxypropanol. Es können aber auch Alkohole, wie z.B. Isopropanol oder Hexanol eingesetzt werden.

Die erfindungsgemäß hergestellten Umsetzungsprodukte können mit Hilfe eines üblichen Emulgators oder eines Emulgatorharzes in die wäßrige Phase überführt werden. Bei Verwendung eines Emulgators sind nicht-ionische handelsübliche Emulgatoren bevorzugt. Die Emulgierung geschieht z.B. durch Homogenisieren des Umsetzungsprodukts und des Emulgators, gegebenenfalls unter Erwärmen, beispielsweise auf Temperaturen von 30 bis 80°C, z.B. 60°C. Ein derartiges Gemisch kann in einer üblichen Homogenisierungseinrichtung emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Umsetzungsprodukt eingesetzt. Bei Verwendung eines wasserverdünnbaren Harzes als Emulgatorharz kann man so vorgehen, daß sofern saure Gruppierungen im Harz enthalten sind, mit einer üblichen Base, z.B. Ammoniak oder einem organischen Amin, z.B. Triethylamin, neutralisiert wird. In das erhaltene neutralisierte Harzkonzentrat kann dann das erfindungsgemäße Umsetzungsprodukt zugemischt werden und das entstandene Gemisch anschließend in Wasser emulgiert werden. Dies kann beispielsweise unter starkem Rühren und erforderlichenfalls unter Erwärmen, beispielsweise auf Temperaturen von 30 bis 70°C, z.B. 50°C, erfolgen.

Es ist auch möglich bei der Herstellung der Emulgatorharze Monomere mit basischen Gruppierungen, z.B. solche, die tertiäre Amine enthalten, mit einzupolymerisieren. Das so hergestellte, basische Gruppen enthaltende Harz, kann dann mit Säuren, z.B. anorganischen oder organischen Säuren, wie Ameisensäure, Essigsäure, neutralisiert und nach Zugabe des erfindungsgemäßen Umsetzungsproduktes anschließend in Wasser einemulgiert werden.

Ebenfalls möglich ist es das Emulgatorharz teilweise oder vollständig mit Basen bzw. Säuren zu neutralisieren und anschließend mit so viel Wasser zu emulgieren, daß eine Wasser-in-Öl-Emulsion entsteht. Bei Zugabe des erfindungsgemäßen Umsetzungsproduktes orientiert es sich in die Harzphase und durch Zugabe von weiteren Mengen an Wasser erfolgt Phasenumkehr zur Öl-in-Wasser-Emulsion.

Bei den durch das erfindungsgemäße Verfahren erhaltenen Umsetzungsprodukten handelt es sich um Isocyanate, insbesondere Polyisocyanat, die beispielsweise mindestens eine, bei Polyisocyanaten mindestens zwei der folgenden Gruppierungen enthalten: 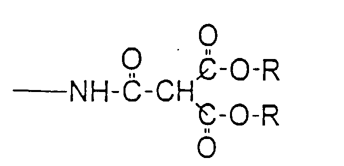 bzw. 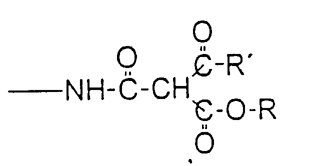
R = Alkyl (gleich oder verschieden)
R' = Methyl

Derartige blockierte oder verkappte Isocyanate besitzen die Eigenschaft, daß sie sich beim Erwärmen in Polyisocyanate zurückverwandeln. Sie können daher mit Verbindungen, die mit Isocyanat reaktive Gruppen, wie beispielsweise Hydroxylgruppen oder Aminogruppen enthalten, gezielt unter Erwärmen umgesetzt werden. Erfindungsgemäß hergestellte blockierte Polyisocyanate können beispielsweise als Vernetzer bzw. Härter für Einbrennlacke Verwendung finden, die Bindemittel mit Gruppen enthalten, die mit Isocyanat reaktiv sind, beispielsweise hydroxyfunktionelle und aminfunktionelle Bindemittel. Die erfindungsgemäß erhaltenen Umsetzungsprodukte reagieren dabei mit hydroxyfunktionellen Bindemitteln unter Umesterung bzw. bei höherer Einbrenntemperatur unter Deblockierung und Urethanbildung. Die erfindungsgemäß erhaltenen Polyisocyanate sind besonders für Lackierungen, z.B. Mehrschichtlackierungen geeignet. Sie können z.B. in Füllern, Basislacken, Klarlacken, Decklacken und Zweischicht-Decklacken Verwendung finden. Da sie nicht zur Vergilbung neigen, eignen sie sich auch besonders gut als Härterkomponente, beispielsweise für Einkomponenten-Einbrennlacke und zur Herstellung von Drahtlackisolierungen.

In den folgenden Beispielen beziehen sich Teile (T) und % auf das Gewicht.

### Beispiel 1

### Umsetzung von Isophorondiisocyanat-Isocyanurat mit Malonsäurediethylester

376 T Isophorondiisocyanat-Isocyanurat (unter dem Handelsnamen Vestanat IPDI T-1890 der Fa. Hüls erhältlich) werden in 350 T Solvesso 100 unter Aufheizen auf 80°C gelöst. Anschließend werden 4 T wasserfreies Lithiumhydroxid zugegeben. 271 T Malonsäurediethylester werden dann so zugetropft, daß die Reaktionstemperatur 90°C nicht übersteigt. Die Reaktionsmischung wird solange auf 90°C gehalten, bis ein NCO-Gehalt von < 0,5 % erreicht ist. Durch Filtration über 1 µm-Filter wird das ungelöste Lithiumhydroxid abfiltriert.

Endwerte: FK (1h/150°C) : 60,7, Viskosität (25°C): 2400 mPas, Farbzahl (Gardner): 2; Lithiumgehalt (Atomabsorptionsspektroskopie: 48 ppm.)

### Vergleichsversuch

Analog Beispiel 1) aber mit 6 Z Lithiummethanolat als Katalysator

Endwerte: FK (1h/150°C): 60,2 %, Viskosität (25°C): 5795 mPas, Farbzahl (Gardner): 6, Lithiumgehalt (Atomabsorptionsspektroskopie: 126 ppm.)

### Beispiel 2

### Umsetzung von Hexamethylendiisocyanat-Isocyanurat mit Malonsäurediethylester

Analog Beispiel 1) werden 351 T Hexamethylendiisocyanat-Isocyanurat (unter dem Handelsnamen Tolonat HDT/100 der Fa. Rhone-Poulenc erhältlich) in 350 T Solvesso 100 in Gegenwart von 4,3 T wasserfreiem Lithiumhydroxid mit 295 T Malonsäurediethylester umgesetzt.

Endwerte: FK (1h/150°C): 60,3 %, Viskosität (25°C): 680 mPas, Farbzahl (Gardner): 1.

### Beispiel 3

### Umsetzung von Isophorondiisocyanat-Isocyanurat mit Acetessigsäureethylester

Analog Beispiel 1) werden 410 T Vestanat IPDI T-1890 in 350 T Solvesso 100 in Gegenwart von 4,1 T wasserfreiem Lithiumhydroxid mit 240 T Acetessigsäureethylester umgesetzt.

Endwerte: FK (1H/150°C): 61 %, Viskosität (25°C): 1300 mPas, Farbzahl (Gardner): 3.

## Patentansprüche

1. Verfahren zur Herstellung von blockierten Isocyanaten, durch Umsetzung von freien Isocyanaten unter wasserfreien Bedingungen mit aciden Wasserstoff enthaltenden Blockierungsmitteln in Anwesenheit von basischen Katalysatoren, dadurch gekennzeichnet, daß man als basische Katalysatoren ein oder mehrere Alkalihydroxide verwendet.

2. Verfahren nach Anspruch 1, dadurch gekennzeichnet, daß man als Alkalihydroxid Lithiumhydroxid verwendet.

3. Verfahren nach Anspruch 1 oder 2, dadurch gekennzeichnet, daß man als Isocyanate Polyisocyanate mit mindestens zwei Isocyanatgruppen pro Molekül umsetzt.

4. Verfahren nach einem der Ansprüche 1 bis 3, dadurch gekennzeichnet, daß man als Blockierungsmittel Malonsäuredialkylester und/oder Acetessigsäurealkylester umsetzt.

5. Verfahren nach einem der vorhergehenden Ansprüche, dadurch gekennzeichnet, daß man die Umsetzung lösemittelfrei oder in Anwesenheit von organischen Lösemitteln durchführt.

6. Verfahren nach einem der vorhergehenden Ansprüche, dadurch gekennzeichnet, daß man die Umsetzung unter Erwärmen durchführt.

7. Verfahren nach einem der vorhergehenden Ansprüche, dadurch gekennzeichnet, daß man nach beendeter Umsetzung die Katalysatoren durch Filtration oder Zentrifugieren entfernt.

8. Verfahren nach einem der vorhergehenden Ansprüche, dadurch gekennzeichnet, daß man das erhaltene Reaktionsprodukt anschließend in die wäßrige Phase überführt.

9. Blockierte Isocyanate mit einem Alkaligehalt von weniger als 100 ppm, erhalten nach dem Verfahren eines der Ansprüche 1 bis 8.

10. Verwendung der blockierten Isocyanate nach Anspruch 9 oder erhalten nach dem Verfahren eines der Ansprüche 1 bis 8 als Vernetzer für Polyole.

11. Verwendung der blockierten Isocyanate nach Anspruch 9 oder erhalten nach dem Verfahren eines der Ansprüche 1 bis 8 bei der Herstellung von Lackierungen, insbesondere Mehrschichtlackierungen.

## Claims

1. Process for the production of blocked isocyanates by reacting free isocyanates under anhydrous conditions with blocking agents containing acidic hydrogen in the presence of basic catalysts, characterised in that one or more alkali metal hydroxides is/are used as the basic catalysts.

2. Process according to claim 1, characterised in that the alkali metal hydroxide used is lithium hydroxide.

3. Process according to claim 1 or 2, characterised in that the isocyanates reacted are polyisocyanates containing at least two isocyanate groups per molecule.

4. Process according to one cf claims 1 to 3,
characterised in that malonic acid dialkyl esters and/or acetoacetic acid alkyl esters are reacted as the blocking agent.

5. Process according to one of the preceding claims, characterised in that the reaction is performed without solvents or in the presence of organic solvents.

6. Process according to one of the preceding claims, characterised in that the reaction is performed with heating.

7. Process according to one of the preceding claims, characterised in that, once the reaction is complete, the catalysts are removed by filtraticn or centrifugation.

8. Process according to one of the preceding claims, characterised in that the reaction product obtained is then converted into the aqueous phase.

9. Blocked isocyanates having an alkali metal content of less than 100 ppm obtained using the process of one of claims 1 to 8.

10. Use of the blocked isocyanates according to claim 9 or obtained using the process of one of claims 1 to 8 as a crosslinking agent for polyols.

11. Use of the blocked isocyanates according to claim 9 or obtained using the process of one of claims 1 to 8 in the production of lacquer coatings, in particular multi-layer lacquer coatings.

## Revendications

1. Procédé de préparation d'isocyanates bloqués, par transformation d'isocyanates libres dans des conditions anhydres, avec des agents de blocage contenant de l'hydrogène acide, en présence de catalyseurs basiques, caractérisé en ce que l'on utilise en tant que catalyseurs basiques un ou plusieurs hydroxyde(s) alcalin(s).

2. Procédé selon la revendication 1, caractérisé en ce qu'on utilise en tant qu'hydroxyde alcalin de l'hydroxyde de lithium.

3. Procédé selon la revendication 1 ou 2, caractérisé en ce que l'on transforme en tant qu'isocyanates, des polyisocyanates avec au moins deux groupes isocyanate par molécule.

4. Procédé selon l'une des revendications 1 à 3, caractérisé en ce que l'on transforme en tant qu'agent de blocage du dialkylester d'acide malonique et/ou de l'alkylester d'acide acétylacétique.

5. Procédé selon l'une quelconque des revendications précédentes, caractérisé en ce que la transformation est réalisée sans solvant ou en présence de solvants organiques.

6. Procédé selon l'une quelconque des revendications précédentes, caractérisé en ce que la transformation est réalisée par chauffage.

7. Procédé selon l'une quelconque des revendications précédentes, caractérisé en ce que l'on élimine les catalyseurs, une fois terminée la transformation, par filtration ou centrifugation.

8. Procédé selon l'une quelconque des revendications précédentes, caractérisé en ce que le produit de réaction obtenu est finalement transformé en phase aqueuse.

9. lsocyanates bloqués avec une teneur alcaline inférieure à 100 ppm, obtenus avec le procédé selon l'une des revendications 1 à 8.

10. Utilisation des isocyanates bloqués selon la revendication 9 ou obtenus avec le procédé selon l'une des revendications 1 à 8, en tant qu'agents de réticulation pour polyols.

11. Utilisation des isocyanates bloqués selon la revendication 9 ou obtenus avec le procédé selon l'une des revendications 1 à 8, dans la fabrication de laques, en particulier de laques multicouches.
